# EUROPEAN PATENT SPECIFICATION

(11) **EP 2 175 730 B1**
(45) Date of publication and mention of the grant of the patent: **19.01.2011**
(21) Application number: 08796351.8
(22) Date of filing: 21.07.2008
(51) Int. Cl.: A01N 63/04, A01P 15/00

(54) **FUNGAL ISOLATES AND THEIR USE TO CONFER SALINITY AND DROUGHT TOLERANCE IN PLANTS**
PILZISOLATE UND IHRE VERWENDUNG ZUR FÖRDERUNG VON SALZ- UND TROCKENHEITSTOLERALZ BEI PFLANZEN
ISOLATS FONGIQUES ET LEUR UTILISATION POUR CONFÉRER UNE TOLÉRANCE À LA SALINITÉ ET À LA SÉCHERESSE AUX PLANTES

(30) Priority: 19.07.2007 US 950755 P
(43) Date of publication of application: 21.04.2010
(73) Proprietor: Montana State University, 304 Montana Hall Bozeman, Montana 59717 (US); The Government of The United States of America, Represented by the Secretary of The Department of the Interior, 1849 C Street Washington, DC 20240 (US)
(72) Inventor: REDMAN, Regina S., Seattle, WA 98125 (US); RODRIGUEZ, Russell J., Seattle, WA 98115 (US)
(74) Representative: Walton, Seán Malcolm
(86) International application number: PCT/US2008/070610
(87) International publication number: WO 2009/012480

(56) References cited:
- WALLER FRANK ET AL: "The endophytic fungus Piriformospora indica reprograms barley to salt-stress tolerance, disease resistance, and higher yield" PROCEEDINGS OF THE NATIONAL ACADEMY OF SCIENCES OF THE UNITED STATES OF AMERICA, vol. 102, no. 38, September 2005 (2005-09), pages 13386-13391, XP002562711 ISSN: 0027-8424
- PANAHPOUR H: "The effects of symbiotic mycorrhizal fungi on drought tolerance and forage production of lucerne (Medicago sativa)" XX INTERNATIONAL GRASSLAND CONGRESS: OFFERED PAPERS, ACADEMIC PUBLISHERS, NL, 1 January 2005 (2005-01-01), page 311, XP008116829 ISBN: 978-90-76998-81-7
- QAHER A. MANDEEL: "Biodiversity of the genus Fusarium in saline soil habitats" J.BASIC MICROBIOL:, vol. 46, no. 6, 2006, pages 480-494, XP008117013

### SEQUENCE LISTING

<110> Montana State University
<120> Fungal Isolates and Their Use to Confer Salinity and Drought Tolerance in Plants
<130> MONT-094/01WO
<150> US 60/950,755
   <151> 2007-07-19
<160> 6
<170> PatentIn version 3.5
<210> 1
   <211> 20
   <212> DNA
   <213> Unknown
<220>
   <223> ITS4 primer
<400> 1
   tcctccgctt attgatatgc 20
<210> 2
   <211> 22
   <212> DNA
   <213> Unknown
<220>
   <223> ITS5 primer
<400> 2
   ggaagtaaaa gtcgtaacaa gg 22
<210> 3
   <211> 20
   <212> DNA
   <213> Unknown
<220>
   <223> EF1T primer
<400> 3
   atgggtaagg aggacaagac 20
<210> 4
   <211> 21
   <212> DNA
   <213> Unknown
<220>
   <223> EF2T primer
<400> 4
   ggaagtacca gtgatcatgt t 21
<210> 5
   <211> 19
   <212> DNA
   <213> Unknown
<220>
   <223> EF11 primer
<400> 5
   gtggggcatt taccccgcc 19
<210> 6
   <211> 19
   <212> DNA
   <213> Unknown
<220>
   <223> EF22 primer
<400> 6
   aggaaccctt accgagctc 19

## Description

### DESCRIPTION OF THE TEXT FILE SUBMITTED ELECTRONICALLY

The contents of the text file submitted electronically herewith are incorporated herein by reference in their entirety: A computer readable format copy of the Sequence Listing of the Sequence Listing (filename: MONT 094 01WO SeqList_ST25.txt, date recorded: July 21, 2008, file size 2 kilobytes).

### FIELD OF THE INVENTION

The invention relates to the use of endophytic fungi, particularly *Fusarium* species, to treat plants, including both monocots and dicots. The treatment results in the host plant acquiring stress tolerance, in particular salinity tolerance. In addition, the fungi of the present invention could potentially be used to decrease salt levels in soil.

### BACKGROUND OF THE INVENTION

Plant responses to abiotic stresses such as salinity, heat and drought are genetically complex. It is believed that all plants have the capability to perceive, transmit signals and respond to stress (Bartels et al., 2005, Crit. Rev. Plant Sci. 24: 23-58; Bohnert et al., 1995, The Plant Cell 7: 1099-1111). Plant responses common to these stresses include osmolyte production, alteration of water transport, and the scavenging of reactive oxygen species (ROS) (Leone et al., 2003, in Abiotic Stresses in Plants, Kluwer Academic Pub., London, 1-22; Maggio et al., in Abiotic Stresses in Plants, Kluwer Academic Pub., London, 53-70; Tuberosa et al., in Abiotic Stresses in Plants, Kluwer Academic Pub., London, 71-122). Regardless, relatively few species are able to thrive in habitats that impose high levels of abiotic stress (Alpert P, 2000, Plant Ecol. 151: 5-17). Although there has been extensive research in plant stress responses (Smallwood et al., 1999, in Plant Responses to Environmental Stress, BIOS Scientific Pub. Ltd., Oxford, p. 224), questions still remain regarding the mechanisms by which plants adapt to abiotic stress.

One of the lease studied aspects of plant biology is symbiosis with endophytic fungi. Fossil records indicate that fungi have been associated with plants for at least 400 million years and it is proposed that fungal symbiosis was responsible for the movement of plants onto land (Redecker et al., 2000, Science 289: 1920-1; Pirozynski et al., 1975, Biosystems 6: 153-164). There are at least three classes of fungal symbionts: mycorrhizae, class 1 endophytes, and class 2 endophytes (Rodriguez et al., 2005, in The Fungal Community: Its Organization and Role in the Ecosystem, Taylor & Francis/CRC Press, Boca Raton, FL, 683-96). A great deal is known about mycorrhizal fungi that are associated with plant roots and share nutrients with their plant hosts, and about the clavicipitaceous fastidious endophytes (class 1) that infect cool season grasses (Read DJ, 1999, in Mycorrhiza, Springer-Verlag Pub., Berlin, 3-34; Schardl et al., 2004, Annu. Rev. Plant Biol. 55: 315-40). However, comparatively little is known about the ecological significance of class 2 endophytes, which are the largest group of fungal symbionts and are thought to colonize all plants in natural ecosystems (Petrini O, 1986, in Microbiology of the Phyllosphere, Cambridge University Press, Cambridge, 175-87). This is partially because the symbiotic functionality of class 2 endophytes have only recently been elucidated (Redman et al., 2002, Science 298: 1581; Arnold et al., 2003, Proc. Natl. Acad. Sci. 100: 15649-54; Waller et al., 2005, Proc. Natl. Acad. Sci. 102: 13386-91). Class 2 endophytes confer stress tolerance to host species and play a significant role in the survival of at least some plants in high stress environments. For example, class 2 endophytes confer heat tolerance to plants growing in geothermal soils (Redman *et al.,* supra), the extent of tree leaf colonization by endophytes correlates with the ability to resist root pathogens (Arnold *et al.,* supra), and endophytes confer drought tolerance to multiple host species (Waller *et al.,* supra). Based on studies of class 2 endophytes in geothermal soils, coastal beaches and agricultural fields, the present inventors describe a newly observed ecological phenomenon defined as Adaptive-Symbiosis. This habitat-specific phenomenon provides an intergenomic epigenetic mechanism for plant adaptation and survival in high-stress habitats.

Among the primary abiotic stresses is salinity stress. Soil salinity is a major constraint to world-wide food production because it limits agricultural yield and restricts the use of lands previously uncultivated. The United Nations Environmental Program estimates that approximately 20% of agricultural land and 50% of cropland in the world is salt-stressed (Flowers et al., 1995, Aust. J. Plant Physiol. 22, 875-84). Natural boundaries imposed by soil salinity also limit the caloric and the nutritional potential of agricultural production (Yokoi et al., 2002, JIRCAS Working Report 25-33). Constraints on agricultural production produced by salinity stresses are most acute in areas of the world where food distribution is problematic because of insufficient infrastructure or political instability. Although water and soil management practices have facilitated improved agricultural production on soils marginalized by salinity, there are still serious deficiencies the currently available strategies for enhancing salt tolerance of crops.

Accordingly, there is a need for compositions and methods for treating salt stresses in plants, including monocots and dicots. There is also a need to reduce the salt content of soils which accumulate naturally or through the actions of humankind.

### SUMMARY OF THE INVENTION

In accordance with the objects outlined herein, the present invention provides methods of treating a target plant to confer stress tolerance comprising inoculating the plant or a part of the plant with a culture of endophytic fungi, such as *Fusarium spp.* In an exemplary embodiment, the stress tolerance conferred to the plant is salt tolerance. In one aspect, the fungi and methods of the present invention can induce salt tolerance in a plant to the concentration of salt in salt water, such as ocean water.

The fungi of the present invention may also confer other types of stress tolerance to the plant in addition to salt tolerance. Examples of such additional stress tolerance imparted by the endophytic fungi of the present invention include but are not limited to drought tolerance, temperature tolerance (such as to high or low temperatures, or to both high and low temperatures), CO₂ tolerance, heavy metal tolerance (such as tolerance to iron), disease tolerance (such as to diseases to plant roots) and tolerance to pH (such as to high or low pH, or to both high and low pH).

The fungi and methods of the present invention can be applied to wide variety of agricultural, ornamental and native plant species. The fungi and the methods of the present invention can increase the growth and/or yield of any such plants. Furthermore, the fungi and methods of the present invention require no genetic modification of the plants in order to gain the benefits conferred by them. Thus, the present invention does not have to involve genetically modified organisms (GMOs) although it can be used with GMO plants too.

In certain embodiments, target plants of the present invention include monocotyledonous plants, also called monocotyledons or monocots. In certain exemplary embodiments, the monocot is selected from the group consisting of a grass (e.g., turf grasses), corn, wheat, oat, and rice.

In certain other embodiments, target plants of the present invention include dicotyledonous plants, also called dicotyledons or dicots. In some embodiments, the dicot is a eudicot, also called true dicots. In certain exemplary embodiments, the dicot is selected from the group consisting of a tomato, watermelon, squash, cucumber, strawberry, pepper, soybean, alfalfa, and Arabidopsis.

In other embodiments, the present invention provides methods of treating plant parts of a target plant to confer stress tolerance. Plant parts of the invention may include, for example, seeds and seedlings, or parts of a seedling, such as the root. In one aspect, the fungi of the present invention can easily be applied as a seed coating.

In another aspect, the present invention provides methods of treating a target plant to confer growth enhancement comprising inoculating the plant or a part of the plant with a culture of an endophytic fungi, such as a *Fusarium spp.* Examples of other endophytic fungi applicable to the present invention include species of *Curvularia, Alternaria, Phomopsis, Drechslera* and *Trichoderma.*

In another aspect, the present invention provides methods of decreasing salt levels in a soil or other growth media comprising inoculating a plant or a part of the plant with a culture of endophytic fungi, such as *Fusarium spp.* (e.g., *Fusarium culmorum* isolate FcRed1) and growing the inoculated plant on or in such soil or other growth media. The endophytic fungi enables the inoculated plant to translocate salt from the soil or other growth media to leaf secretion vessels of the plant, thereby removing the salt from the soil. By subsequently washing the plant with a liquid (e.g., water) and removing the liquid from the area or by subsequently removing the whole plant or a part of the plant it would be possible to remove the excess salt from the area of the soil.

The fungi and methods of the present invention can be used for the growth and maintenance of plants, such as crop plants, in natural salt or salt encroachment environments, such as highly irrigated land or lands close to salt or brackish water, such as a peninsula into a bay or salt marsh.

The fungi and methods of the present invention can be used for environmental restoration of lands that have unacceptable levels of salinity for their intended purposes. The lands may naturally have high levels of salt or the high levels of salt may have been caused by the activities of humankind, such as through irrigating the land or mining operations. Therefore, the fungi and methods of the present invention may be used to decrease salt levels in soil and other growth media as well as to make plants salt tolerant.

In yet another aspect, the present invention provides a composition comprising a pure culture of *Fusarium spp.* In some embodiments, the methods and compositions of the present invention comprise *Fusarium culmorum.* In certain exemplary embodiments, the *Fusarium culmorum* isolate is FcRed1.

### BRIEF DESCRIPTION OF THE DRAWINGS

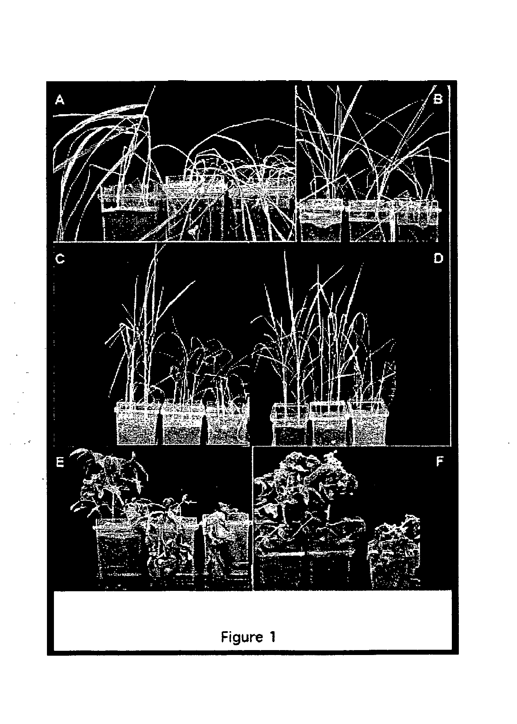

**FIG 1****.** shows the effect of symbiosis on salt and drought tolerance in monocots and eudicots. All descriptions are from left to right and images representative of all plants/treatment. In the description provided herein the number of plants/treatment are indicated by (N=XX), and the % survival and health of surviving plants is indicated in parentheses after each treatment. Plant health was based on comparison to non-symbiotic controls and rated from 1 to 5 (1=dead, 2=severely wilted, 3=wilted, 4=slightly wilted, 5=healthy w/o lesions or wilting). **A)** Dunegrass plants (N=30) symbiotic with FcRed1 (100%, 5), symbiotic with Fc18 (0%, 1), or non-symbiotic (0%, 1) exposed to 500 mM NaCl for 14 days. While all plants bent over with age, unstressed controls and salt exposed FcRed1 colonized plants remained fully hydrated while the other treatments wilted and lost turgor. **B)** Dunegrass plants (N=30) symbiotic with FcRed1 (100%, 4), symbiotic with Fc18 (100%, 4), or non-symbiotic (0%, 1) grown without water for 14 days. **C)** Rice plants [cultivar Dongjin (N=45)] symbiotic with FcRed1 (100%, 5), symbiotic with Fc18 (0%, 1), or non-symbiotic (0%, 1) exposed to 500 mM NaCl for 10 days. D) Rice plants [cultivar Dongjin (N=45)] symbiotic with FcRed1 (100%, 5), symbiotic with Fc18 (100%, 5), or non-symbiotic grown without water for 10 days. **E)** Tomato plants [cultivar Tiger-like (N=12)] symbiotic with FcRed1 (100%, 5), symbiotic with Fc18 (0%,1), or non-symbiotic (0%,1) exposed to 300 mM NaCl for 14 days. **F)** Tomato plants [cultivar Tiger-like (N=12)] symbiotic with FcRed1 (100%, 5), symbiotic with Fc18 (100%, 5), or non-symbiotic (0%, 1) grown without water for 10 days. Although not shown, symbiotic and non-symbiotic control plants grown in the absence of stress were healthy (100%, 5) throughout the experiments. All assays were repeated a minimum of three times.

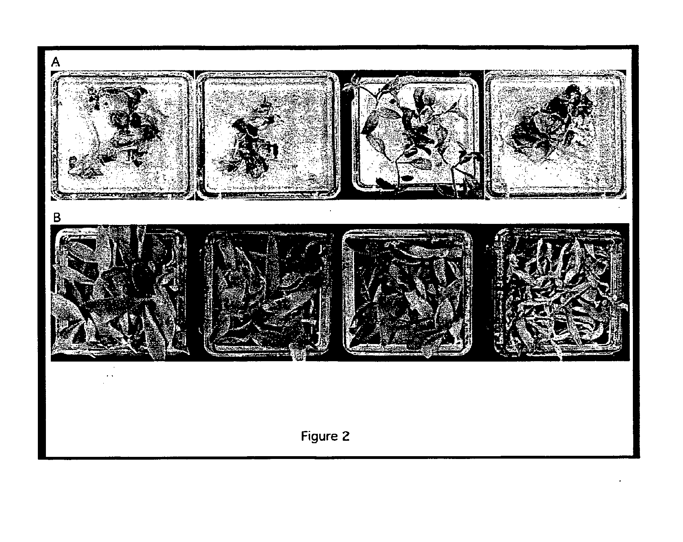

**FIG 2****.** shows the effect of symbiosis on heat and drought tolerance in a eudicot and a monocot. Descriptions are left to right and the images are representative of all plants/treatment. In the description provided herein the number of plants/treatment are indicated by (N=XX), and the % survival and health of survivors is indicated in parentheses after each treatment. Plant health was based on comparison to non-symbiotic controls and rated from 1 to 5 (1=dead, 2=severely wilted, 3=wilted, 4=slightly wilted, 5=healthy w/o lesions or wilting). **A**) Tomato seedlings [cultivar Tiger-Like (N=30)] symbiotic either with FcRed1 (0%, 1), CpMH206 (0%, 1), or Cp4666D (100%, 5), or non-symbiotic (0%, 1) exposed to 50°C root temperatures for 5 days. **B)** Panic grass (N=30) symbiotic either with FcRed1 (100%, 5), CpMH206 (100%, 5), or Cp4666D (100%, 5), or non-symbiotic (0%, 1) grown without water for 7 days. All assays were repeated a minimum of three

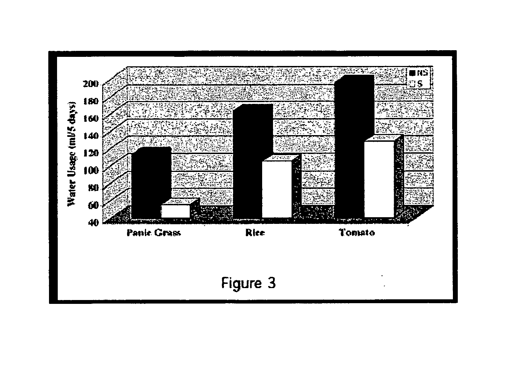

**FIG 3****.** shows water usage in symbiotic (S) and non-symbiotic (NS) plants (N = 25, 120, and 30 for panic grass, rice, and tomato, respectively) was quantified over 5 days with SD values no greater than 12.5 and P values (ANOVA single factor analysis) less than 1.00E-05. All assays were repeated a minimum of three times. Panic grass and tomato plants were symbiotic (S) with Cp4666D, rice plants were colonized with FcRed1 and all other treatments were non-symbiotic (NS).

### DETAILED DESCRIPTION

The present invention is directed to methods and compositions of endophytic fungi that confer stress tolerance in inoculated plants, including both monocots and dicots. In particular, *Fusarium* species, isolated from the dunegrass, *Leymus mollis,* growing in plant communities on Puget Sound beaches of Washington State. Upon inoculating a target plant or plant part, such as seedlings or seeds, the resulting plant shows stress tolerance, particularly drought and salt tolerance.

Accordingly, the present invention is directed to the use of certain endophytic fungi for the treatment of plants to confer stress tolerance. By "endophytic fungi" herein is meant a fungus that generally resides in the intra- and/or inter-cellular space of a plant. The endophytic fungi of the invention confer stress tolerance, in particular drought and/or salt tolerance.

In an exemplary embodiment, the endophytic fungi is a species of *Fusarium.* In certain embodiments, the Fusarium species is identified on the basis of morphological and genomic sequences, particularly rDNA sequences, as outlined herein. In general, these Fusarium species are isolated from host plants growing in coastal habitats, particularly those as discussed herein, such as those isolated from *L. mollis,* at saline concentrations such as outlined in the Figures.

As will be appreciated by those in the art, there are a number of suitable *Fusarium* species that find use in the present invention. In particular, the species represented by isolate FcRed1 is preferred, having the variable ITS1 and ITS2 regions of rDNA and the regions of the translation elongation factor as outlined herein.

The endophytic fungi of the invention are useful in the treatment of target plants to confer stress tolerance. Suitable plants include both monocots and dicots (including eudicots) that can be colonized by the endophytic fungi of the invention. The plant may be at any stage of growth, including seeds, seedlings, or full plants. In addition, as discussed herein, any part of the plant may be inoculated; suitable plant parts include seeds, roots, leaves, flowers, stems, etc.

In some embodiments, the target plant is a plant of the family Graminae (grasses). The grass plants into which these endophytes are introduced may be any of the useful grasses belonging to the genuses Agropyron, Agrostis, Andropogon, Anthoxanthum, Arrhenatherum, Avena, Brachypodium, Bromus, Chloris, Cynodon, Dactylis, Elymus, Eragrostis, Festuca, Glyceria, Hierochloe, Hordeum, Lolium, Oryza, Panicum, Paspalum, Phalaris, Phleum, Poa, Setaria, Sorghum, Triticum, Zea and Zoysia. In other words, this invention relates to grasses belonging to these genera into which endophytes are artificially introduced. In the context of this invention, this also includes future generations of grasses.

In certain embodiments, the target plant is selected from the wheats, including, but not limited to *Triticum monococcum, Triticum turgidum, Triticum timopheevi* (Timopheev's Wheat) and *Triticum aestivum* (Bread Wheat).

In certain embodiments, the target plant is a corn of the genus Zea. Zea is a genus of the family Gramineae (Poaceae), commonly known as the grass family. The genus consists of some four species: *Zea mays,* cultivated corn and teosinte; Zea *diploperennis Iltis* et at., *diploperennial teosinte; Zea luxurians* (Durieu et Asch.) Bird; and *Zea perennis* (Hitchc.) Reeves et Mangelsd., perennial teosinte.

Specific useful grasses include, but are not limited to, *D languinsoum,* rye grasses, and bluegrasses. Bluegrasses known in the art include Kentucky bluegrass, Canada bluegrass, rough meadow grass, bulbous meadow grass, alpine meadow grass, wavy meadow grass, wood meadow grass, Balforth meadow grass, swamp meadow grass, broad leaf meadow grass, narrow leaf meadow grass, smooth meadow grass, spreading meadow grass and flattened meadow grass.

In certain other embodiments, compositions of the invention find use in the treatment of dicots, including eudicots such as tomato, watermelon, squash, cucumber, strawberry, pepper, soybean, alfalfa and Arabidopsis.

This invention relates to target plants obtained by artificially introducing an endophyte into plants not containing filamentous endophytic fungi, i.e. plants not infected with an endophyte, and/or into infected plants from which endophytes have been previously removed. In the context of this invention, the endophyte which is artificially introduced into the target plant, e.g. the grasses, is an endophytic fungus that confers stress tolerance to the target plant.

These endophytes are discovered by looking for endophytes that live in plants growing in nature, subjecting them at least to a salinity or drought test, and artificially introducing those endophytes confirmed by the test to have such resistance.

The compositions of endophytic fungi of the invention are useful in conferring stress tolerance to plants and plant parts. "Stress" in this context is an environmental stress, including, but not limited to, high temperature (e.g. thermal stress), drought (e.g. lack of water), metals and metal ions, which cause a variety of plant problems and/or death, abnormal pH (including both acidic and/or alkaline), and salinity (e.g. salt stress). The endophytic cultures outlined here allow the confirmation of stress resistance to the target plant.

In one exemplary embodiment, the stress tolerance is drought tolerance. In this case, while neither target plant nor fungi alone can survive in the decreased water conditions described herein, the culturing of the target plant with the fungi results in at least about a 5, 10, 20, 25 and 50% or more change in drought tolerance, as measured herein, and compared to controls lacking the fungus.

In another exemplary embodiment, the stress tolerance is salinity tolerance. In this case, while neither target plant nor fungi alone can survive in the increased salt conditions described herein, the culturing of the target plant with the fungi results in at least a 5, 10, 20, 25, and 50% or more change in salt tolerance, as measured herein, and compared to controls lacking the fungus.

As used herein, the term "salt stress" or "salinity stress" refers to both ionic and osmotic stresses on plants.

Ionic and osmotic stresses can be distinguished at several levels. In salt-sensitive plants, shoot and to a lesser extent root growth is permanently reduced within hours of salt stress and this effect does not appear to depend on Na⁺ concentrations in the growing tissues, but rather is a response to the osmolarity of the external solution (Munns et al., 2002, Plant Cell and Environ. 25: 239-250). Na⁺-specific damage is associated with the accumulation of Na⁺ in leaf tissues and results in necrosis of older leaves, starting at the tips and margins and working back through the leaf. Growth and yield reductions occur as a result of the shortening of the lifetime of individual leaves, thus reducing net productivity and crop yield. The timescale over which Na⁺-specific damage is manifested depends on the rate of accumulation of Na⁺ in leaves, and on the effectiveness of Na⁺ compartmentation within leaf tissues and cells. These Na⁺-specific effects are superimposed on the osmotic effects of NaCl and, importantly, show greater variation within species than osmotic effects.

At the molecular level, signaling mechanisms activated by salt stress include both drought-induced and Na⁺-specific pathways. Some effects of high soil Na⁺ are also the result of deficiency of other nutrients, or of interactions with other environmental factors, such as drought, which exacerbate the problems of Na⁺ toxicity.

As will be understood by those in the art, plant species vary in how well they tolerate salt-affected soils. Some plants will tolerate high levels of salinity while others can tolerate little or no salinity. The relative growth of plants in the presence of salinity is termed their salt tolerance. In certain exemplary embodiments, the methods and compositions of the present invention produce at least a 5, 10, 20, 25, and 50% or more increase in salt tolerance, as may be measured by the methods described herein (e.g. an increase in EC as described below, an increase in biomass yield, or an increase in leaf lifetime following exposure to salt tolerance).

Salt tolerances are usually given in terms of the stage of plant growth over a range of electrical conductivity (EC) levels. Electrical conductivity is the ability of a solution to transmit an electrical current. To determine soil salinity EC, an electrical current is imposed in a glass cell using two electrodes in a soil extract solution taken from the soil being measured (soil salinity). The units are usually given in deciSiemens per metre (dS/m). Salinity levels vary widely across a saline seep. Salinity also varies from spring to fall. Salinity usually appears on the soil surface just after spring thaw.

Accordingly, as will be understood by those in the art, the concentration of *Fusarium spp.* used to confer stress tolerance, for example, increased salinity tolerance may vary depending on the plant or plant part to be treated and the season in which the treatment occurs. For instance, plants such as strawberry plants have a relatively low salt tolerance (≤ 4 EC) while certain wheatgrasses, e.g. tall wheatgrass and slender wheatgrass have a relatively high salt tolerance (≥ 8 EC).

In addition to stifling growth of existing plants, high salt levels can also interfere with the germination of new seeds. Salinity acts like drought on plants, preventing roots from performing their osmotic activity where water and nutrients move from an area of low concentration into an area of high concentration. Therefore, because of the salt levels in the soil, water and nutrients cannot move into the plant roots.

As soil salinity levels increase, the stress on germinating seedlings also increases. In general, perennial plants handle salinity better than annual plants. In some cases, salinity also has a toxic effect on plants because of the high concentration of certain salts in the soil. Salinity prevents the plants from taking up the proper balance of nutrients they require for healthy growth.

Thus, in another aspect of the present invention, the endophytic compositions of the invention can confer growth enhancement. Growth enhancement is generally measured as a comparison of plants cultured with the endophytic fungi, e.g. *Fusarium,* with plants lacking the fungi. Differences in plant size, including leaf, root and stems are generally measured by weight, with increased growth being measured as at least about a 5-10% difference between controls and treated target plants, with at least about a 25% difference being preferred.

In yet another aspect of the present invention, a pure culture of the endophytic fungi is used to inoculate plants or plant parts. A "pure culture" in this context means a culture devoid of other cultured endophytic fungi. The culture may be of spores, hyphae, mycelia, or other forms of the fungi, with spores being particularly preferred. In general, spores are used at 1-5 x 10³⁻⁸ spores per plant with 1-3 x 10⁴⁻⁶ being preferred and 1-3 x 10⁵ being particularly preferred. As outlined herein, the endophytic fungi of the invention may be cultured in a variety of ways, including the use of PDA plates as shown in the invention, although liquid cultures may be used as well.

The spores or other inoculum may be placed on seed coats, particularly on seeds of endophytic fungi-free seeds (either naturally occurring or treated to remove any endophytes). It should be noted that the plants, including seeds, may be inoculated with combinations of endophytic fungal cultures, either different species each conferring stress tolerance, either the same type or different types. In addition, mixtures of Fusarium species may be used as well.

The following examples serve to more fully describe the manner of using the above-described invention, as well as to set forth the best modes contemplated for carrying out various aspects of the invention. It is understood that these examples in no way serve to limit the true scope of this invention, but rather are presented for illustrative purposes.

### EXAMPLES

### Example 1

### Evaluation of Coastal Habitats - Role of Fusarium in Conferring Salt Tolerance

Plant communities on Puget Sound beaches of Washington State are commonly dominated by *Leymus mollis* (dunegrass). In this habitat, plants are exposed to sea water during high tides and summer seasons are typically very dry. These plants are annual species that achieve high population densities and remain green until they senesce in the fall. Two hundred dunegrass individuals were collected from four geographically distant locations (>16 km) in Puget Sound and found to be colonized with one dominant class 2 fungal endophyte that represented 95% of all fungi isolated. The endophyte was identified as *Fusarium culmorum* using morphological and molecular techniques and was isolated from plant roots, crowns and lower stems as previously described (Redman et al., 2002, Symbiosis 32: 55-70).

Based on the abiotic stresses imposed in the coastal habitats, we tested the ability of *F. culmorum* (isolate FcRed1) to confer salt and drought tolerance to dunegrass under laboratory conditions. Commercially available seeds were used to generate non-symbiotic and symbiotic *L. mollis* plants (Redman et al., 2001, New Phytol. 151: 705-16). As was observed in other studies, there were no observable differences in the growth, development and health of non-symbiotic and symbiotic plants in the absence of stress (Fig. 1) (Redman et al., 2002, Science*,* supra; Redman et al., 2002, Symbiosis*,* supra; Redman et al., 2001, New Phytol.*,* supra). However, when exposed to a concentration range of NaCl, non-symbiotic plants began to wilt and desiccate at 100 mM NaCl (not shown) while symbiotic plants did not show wilting until they were exposed to 500 mM NaCl for 14 days (Fig. 1a). Thus, FcRed1 confers salt tolerance to levels equivalent to that of sea water (0.5-0.6M).

The ability of FcRed1 to confer drought tolerance was determined by the length of time required for symbiotic and non-symbiotic plants to wilt after watering was terminated (Redman *et al.,* 2001, *New Phytol.,* supra). Dunegrass plants colonized with FcRed1 wilted after 14 days without water while non-symbiotic plants wilted after 6 days and were dead after 14 days (Fig 1b).

A field study was performed to determine if FcRed1 was required for survival in coastal habitats. Symbiotic and non-symbiotic plants were grown for three months in a cold-frame greenhouse and transplanted as two clusters of 10 plants/treatment to a beach on the University of Washington's Cedar Rocks Biological Preserve, Shaw Island (San Juan archipelago, WA). Prior to transplanting, a replicate set of plants were analyzed for fungal colonization indicating that all symbiotic plants (N=30) were colonized with FcRed1 and all non-symbiotic plants (N=30) were devoid of fungi. Three months after transplanting, the plants were evaluated for survival and biomass. All dunegrass plants initially colonized with FcRed1 (N=20) survived in this coastal habitat achieving an average biomass of 19.16 g (sd=5.95) but only 8 of the non-symbiotic plants (N=20) survived achieving an average biomass of 17.58 g (sd=9.23). The 8 surviving non-symbiotic plants were found to be colonized with FcRed1 suggesting that they were colonized after planting. Soil microbial analysis indicated that FcRed1 is present in the rhizosphere of dunegrass but at very low densities (<0.01% of culturable fungi, not shown). Therefore, we surmised that the survival and final biomass of non-symbiotic plants was dependent on the timing of *in situ* colonization by FcRed1. The roots of all plants were colonized with mycorrhizae regardless of survival indicating that either mycorrhizal associations are not required for salt tolerance or that salt tolerance requires a combination of FcRed1 and mycorrhizal symbioses (i.e. non-surviving plants had mycorrhizae but not FcRed1 while all surviving plants had both associations).

The organism *F. culmorum* is known as a cosmopolitan pathogen of monocots and eudicots (Farr et al., 1989, in Fungi on Plants and Plant Products in the United States, APS Press, St. Paul, MN, p. 1252), however, FcRed1 asymptomatically colonized species from both plant groups (Table 1). Remarkably, FcRed1 conferred salt tolerance to rice (monocot) and tomato (eudicot) indicating that the association between FcRed1 and dunegrass was not a tight co-evolutionary relationship with regard to stress tolerance (Table 1, Fig. 1c & 1e).

**Table 1. Host colonization and stress tolerance conferred by fungal endophytes.**

| **Endophyte** | **Dunegrass** | **Panic Grass** | **Rice** | **Tomato** |
|---|---|---|---|---|
| Cp4666D | r, s, D, H | r, s, D, H | r, s, D, H | r, s, D, H |
| CpMH206 | nd | r, s, D | nd | r, s, D |
| FcRed1 | r, s, D, S | r, s, D, S | r, s, D, S | r, s, D, S |
| Fc18 | r, s, D | Nd | r, s, D | r, s, D |

| | | | | |
|---|---|---|---|---|
| Plant colonization (N=5) was assessed by surface sterilization, cutting plants into root (r) and stem (s) sections and plating sections on fungal growth medium (Redman et al., 2001, New Phytol.*,* supra). Plant sections are listed only if fungi grew out from those tissues. Symbiotically conferred drought and heat tolerance was assessed as described (Redman et al., 2002, Science*,* supra; Redman et al., 2001, New Phytol.*,* supra) and denoted as D or H, respectively. Salt tolerance (S) was assessed by watering plants with 300 mM NaCl solutions. nd=not determined. | | | | |

To determine if salt tolerance was unique to FcRed1 and other cohorts from dunegrass, we obtained *F. culmorum* isolate Fc18 from the American Type Culture Collection (ATCC). Fc18 was isolated from an agricultural habitat in the Netherlands that does not impose salt stress. Comparative studies revealed that both FcRed1 and Fc18 tolerated the same levels of salt when grown axenically in culture (not shown) and asymptomatically colonized tomato and dunegrass, but only FcRed1 conferred salt tolerance (Fig 1a). This suggests that FcRed1 conferred salt tolerance is a habitat-specific symbiotically adapted phenomenon. It is possible that the inability of Fc18 to confer salt tolerance was based on insufficient host colonization or an inability to establish a mutualism. However, comparative studies revealed that FcRed1 and Fc18 colonized hosts equivalently (Table 2) and conferred similar levels of drought tolerance (Fig 1b, d & f) indicating that both endophytes were conferring mutualistic benefits to dunegrass, rice and tomato either by conferring salt tolerance and/or drought tolerance, respectively. Therefore, we conclude that the salt tolerance conferred by FcRed1 is a habitat-specific symbiotic adaptation.

**Table 2. Fungal colonization of plants with and without heat stress**

| | Colony Forming Units (CFU) | | | |
|---|---|---|---|---|
| | Panic grass for Cp isolates | | Tomato for Cp & Fc isolates | |
| | Dunegrass for Fc isolates | | | |
| Fungal Isolate | -Stress | +Stress | -Stress | +Stress |
| Cp4666D | 34.7+5.0 (0.236) | 11.0+4.0 (0.048) | 13.7+2.5 (0.74) | 4.3+1.5 (0.067) |
| CpMH206 | 40.7+5.5 (0.236) | 3.7+2.2 (0.048) | 14.3+5.0 (0.74) | 1.0+1.7 (0.067) |
| FcRed1 | 11.6+2.79 (0.49) | 4.8+1.64 (0.027) | 16.8+3.7 (0.43) | 5.6+1.15 (0.001) |
| Fc18 | 10.2+4.55 (0.49) | 2.4+1.14 (0.028) | 15.2+2.28 (0.43) | 1.4+1.14 (0.001) |

| | | | | |
|---|---|---|---|---|
| Monocot (panic grass or dunegrass) and eudicot (tomato) plants were either maintained at 22°C (-stress) or root zones heated to 50°C for 12 days (+ stress) (Redman et al., 2002, Science, supra). Equal amounts of root and lower stem tissues (totaling 0.5 g) from five plants/treatment were blended in 10 ml of STC buffer (1M Sorbitol, 10 mM Tris-HCl, 50 mM CaCl2, pH 7.5) and 100 ul plated on fungal growth medium. CFU are denoted with standard deviations on the right of the + sign. P values were determined by ANOVA single factor analysis and are in parentheses. | | | | |

### Example 2

### Evaluation of Geothermal Soil Habitats

The present inventors previously reported that a fungal endophyte (*Curvularia* sp.) was responsible for thermotolerance of the monocot *Dichanthelium lanuginosum* (panic grass) which thrives in geothermal soils of Yellowstone National Park (Redman et al., 2002, Science*,* supra). The endophyte was been identified as *Curvularia protuberata* using morphological and molecular techniques (methods). Studies similar to those discussed above were performed with an isolate of *C. protuberata* (CpMH206) obtained from ATCC that originated from a grass growing in a non-geothermal habitat in Scotland, United Kingdom. Comparative studies with a *C. protuberata* isolate (Cp4666D) from panic grass and CpMH206 revealed that both isolates equally colonized tomato and panic grass (Table 2). While Cp4666D conferred heat tolerance to both panic grass and tomato plants, CpMH206 did not (Fig 2a). To ensure that CpMH206 was symbiotically communicating with the plants and determine if heat tolerance was a habitat-adapted phenomenon, drought studies were performed as previously described (Redman et al., 2001, New Phytol.*,* supra). As observed with FcRed1 and Fc18, both *Curvularia* isolates (Cp4666D and CpMH206) conferred similar levels of drought tolerance indicating that CpMH206 was conferring mutualistic benefits to the plant host (Fig 2b).

### Example 3

### Evaluation of Agricultural Habitats

Fungi from the genus *Colletotrichum* are designated as plant pathogens yet they can express mutualistic lifestyles depending on the hosts they colonize (Redman et al., 2001, New Phytol.*,* supra). For example, *C. magna* isolate CmL2.5 is a virulent pathogen of cucurbits but asymptomatically colonizes tomato. Depending on the tomato genotype, CmL2.5 will increase growth rates and/or fruit yields, and confer drought tolerance and/or confer disease resistance against virulent pathogens (Redman et al., 2002, Science*,* supra; Redman et al., 2001, New Phytol.*,* supra). Interestingly, the *Colletotrichum* species do not confer salt or heat tolerance to tomato or cucurbits and the *Curvularia* and *Fusarium* isolates described above do not confer disease resistance (not shown). Therefore, *Colletotrichum* species are adapted to agricultural habitat specific stresses (high disease pressure) and confer disease resistance to plant hosts. As seen with the *Curvularia* and *Fusarium* isolates described above, the *Colletotrichum* species also confer drought tolerance (Redman et al., 2001, New Phytol.*,* supra).

### Example 4

### Asymptomatic Nature of the Symbioses

Fungal symbionts are known to express different lifestyles from mutualism to parasitism depending on environmental conditions or host genotype (Redman et al., 2001, New Phytol.*,* supra; Francis et al., 1995, Can. J. Botany 73: S1301-9; Johnson et al., 1997, New Phytol. 135: 575-86; Graham et al., 1998, New Phytol. 140: 103-10). Plants colonized by pathogens either respond by activation of defense systems to wall-off the pathogen resulting in the formation of necrotic lesions or succumb to attack. However, plants colonized by mutualists do not appear to activate host defense systems or form lesions (Redman et al., 1999, Plant Physiol. 119: 795-803). In the experiments described above, there were no observable differences between symbiotic and non-symbiotic plants in the absence of stress suggesting that host defenses were not activated. Moreover, plant seed germination, seedling growth and development, and plant health was the same in symbiotic and non-symbiotic plants grown for 1-2 years in a greenhouse (not shown).

### Example 5

### Stress Tolerance Mechanisms

All of the endophytes described above conferred drought tolerance to monocot and eudicot hosts regardless of the habitat of origin, thus, supporting the theory that fungi were involved in the movement of plants onto land approximately 400 million years ago (Pirozynski et al., 1975, Biosystems*,* supra). Transitioning from aquatic to terrestrial habitats likely presented plants with new stresses, including periods of desiccation that may have been tolerated due to fungal symbioses known to occur at that time. Drought, heat and salt stress affect plant water status resulting in complex plant responses which include increased production of osmolytes (Bohnert et al., 1995, The Plant Cell*,* supra; Wang et al., 2003, Planta 218: 1-14). However, upon exposure to heat stress, non-symbiotic plants significantly increased osmolyte concentrations while symbiotic plants either maintained the same or lower osmolyte concentrations when compared to non-stressed controls (Table 3). This suggests that symbiotic plants use approaches other than increasing osmolyte concentrations to mitigate the impacts of heat stress.

**Table 3. Effect of symbiosis on plant osmolyte concentrations.**

| | **Without Stress** | | **With Heat Stress** | |
|---|---|---|---|---|
| **Treatment** | **Panic Grass** | **Tomato** | **Panic Grass** | **Tomato** |
| NS | 57+5.1 (3.0E-5) | 178+8.7 (0.052) | 142+13.2 (0.007) | 263+24.7 (0.005) |
| S | 102+7.2 (3.0E-5) | 206+15.6 (0.052) | 114+5.7 (0.007) | 127+34.7 (0.005) |

| | | | | |
|---|---|---|---|---|
| Non-symbiotic (NS) and symbiotic (S, with Cp4666D) plants were maintained at 22°C (- stress) or with root zones heated to 50° for 12 days (+stress). Equivalent amounts of root and lower stem tissues (100 mg total) from 3 plants/condition were ground in 500 ul water with 3 mg sterile sand, boiled for 30 min and osmolytes measured with a Micro Osmometer 3300 (Advanced Instruments) (Marquez et al., 2007, Science 315: 513-5). Assays were repeated a minimum of three times and data analyzed using ANOVA single factor analysis. Osmolyte concentrations (milliosmole/kg wet wt.) + SD values are followed by P values are in parentheses. | | | | |

Symbiotic plants consumed significantly less water than non-symbiotic plants regardless of the colonizing endophyte (Fig. 3). Since symbiotic plants achieve the same or increased biomass levels as non-symbiotic plants, decreased water consumption suggests more efficient water usage. Decreased water consumption and increased water use efficiency may provide a unique mechanism for symbiotically conferred drought tolerance. One plant biochemical process common to all abiotic and biotic stresses is the accumulation of reactive oxygen species (ROS) (Apel et al., 2004, Annu. Rev. Plant Biol. 55: 373-99). ROS are extremely toxic to biological cells causing oxidative damage to DNA, lipids, and proteins. One way to mimic endogenous production and assess tissue tolerance to ROS is to expose photosynthetic tissue to the herbicide paraquat. This herbicide is reduced by electron transfer from plant photosystem I and oxidized by molecular oxygen resulting in the generation of superoxide ions and subsequent photobleaching (Vaughn et al., 1983, Plant Cell Environ. 6: 13-20). We exposed symbiotic (with Cp4666D) and non-symbiotic plants to + and - heat stress and then floated excised mature leaf tissue on a solution of paraquat (1 uM) in the presence of light. Twenty four to 48 hours after exposure to paraquat, leaf tissue from non-symbiotic plants exposed to stress were completely photobleached indicating complete chlorophyll degradation, while leaf tissue from symbiotic plants exposed to stress remained green (Table 4). In the absence of stress both non-symbiotic and symbiotic plant leaf tissues remained green in the presence or absence of paraquat. This suggests that Cp4666D either scavenges ROS, induces plants to more efficiently scavenge ROS or prevents ROS production when symbiotic plants are exposed to abiotic stress.

**Table 4. Effect of symbiosis on reactive oxygen species (ROS) generation.**

| | **Without Stress** | | **With Heat Stress** | |
|---|---|---|---|---|
| **Treatment** | **Panic Grass** | **Tomato** | **Panic Grass** | **Tomato** |
| NS | RG | RG | BW | BW |
| S | RG | RG | RG | RG |

| | | | | |
|---|---|---|---|---|
| Leaf discs (N=12) from non-symbiotic (NS) and symbiotic (S, with Cp4666D) plants (N=3 plants/condition) exposed at their root zones to either 22°C or 50°C for 5-7 days (prior to the onset of heat stress symptoms). Leaf disks (3-5 mm) were excised and floated on 1uM paraquat for 24-48 hr in the presence of fluorescent light. Leaf discs either remained green (RG) or bleached white (BW) due to chlorophyll degradation. | | | | |

Class 1 and class 2 fungal endophytes differ in several aspects: class 1 endophytes comprise a relatively small number of fastidious species that have a few monocot hosts and class 2 endophytes (described here) comprise a large number of tractable species with broad host ranges including both monocots and eudicots. In addition, the role of ROS in plant symbioses with class 1 and class 2 endophytes may differ. The class 1 endophyte *Epichloe festucae* appears to generate ROS to limit host colonization and maintain mutualisms (Tanaka et al., 2006, The Plant Cell 18: 1052-66) while the class 2 endophyte Cp4666D reduces ROS production to possibly mitigate the impact of abiotic stress.

Based on the ability of endophytes from grasses to confer stress tolerance to tomato plants, it appears that the genetic/biochemical communication required for symbiotically conferred stress tolerance predates the divergence of monocots and eudicots, est. 140-235 million years ago (Wolfe et al., 1989, Proc. Natl. Acad. Sci. 86: 6201; Chaw et al., 2004, J. Mol. Evol. 58: 424; Yang et al., 1999, J. Mol. Evol. 48: 597). Moreover, the concept that fungal endophytes adapt to stress in a habitat-specific manner was confirmed with different fungal and plant species, and different environmental stresses. This phenomenon is now identified as Adaptive-Symbiosis and it is suggested that fungal endophytes provide an intergenomic epigenetic mechanism for plants to make quantum evolutionary jumps in adaptation to habitat stresses when compared to the rather slow genetic mechanism proposed by Darwin. In fact, field studies done by the present inventors indicate that Adaptive-Symbiosis can confer stress tolerance to plants within a single growing season (Redman et al., 2002, Science*,* supra). However, the precise time frame for endophyte adaptation to stress is not yet known.

### Additional Materials and Methods for Examples 1-5

Endophytes were cultured on 1/10X potato dextrose agar (PDA) medium (supplemented with 50-100 µg/ml of ampicillin, tetracycline, and streptomycin) at 22°C with 12 hour light regime. After 5-14 days of growth, conidia were harvested from the plates by gently scraping off the spores with a sterile glass slide. The spores were resuspended in 10 ml of sterile water, filtered through four layers of sterile cotton cheesecloth gauze and spore concentration adjusted to 10⁴-10⁵ spores/ml.

### Fungal Identification

Fungi were identified using conidiophore and conidial morphology (Barnett et al., 1998, in Illustrated Genera of Imperfect Fungi, American Phytopathology Society, St. Paul, MN, p. 240; Von Arx JA, 1981, in The Genera of Fungi Sporulating in Pure Culture, J. Cramer Pub. Co., Vaduz, Germany, p. 410; Leslie et al., 2005, in The Fusarium Laboratory Manual, Blackwell Publishing, p. 400). Species designations were based on sequence analysis of the variable ITS1 and ITS2 sequences of rDNA (ITS4 = 5'-tcctccgcttattgatatgc-3' primer (SEQ ID NO. 1) and ITS5 = 5'-ggaagtaaaagtcgtaacaagg-3' primer (SEQ ID NO. 2) (White et al., 1990, in PCR Protocols: A Guide to Methods and Applications, Academic Press, Inc, San Diego, p. 315-22)) and translation elongation factor (EF1T = 5'-atgggtaaggaggacaagac-3' primer (SEQ ID NO. 3); EF2T = 5'-ggaagtaccagtgatcatgtt-3' primer (SEQ ID NO. 4); EF11 = 5'-gtggggcatttaccccgcc-3' primer (SEQ ID NO. 5); and EF22 = 5'-aggaacccttaccgagctc-3' (SEQ ID NO. 6) primer (O'Donnell et al., 2000, Proc. Natl. Acad. Sci. 97: 7905-10). DNA was extracted from mycelia and PCR amplified as previously described (Redman et al., 2002, Science*,* supra). PCR products were sequenced and the sequences were BLAST searched against the GenBank database. Morphological and GenBank analysis identified candidate species which were purchased from ATCC for direct sequence comparisons. The rDNA and EFII sequences for isolates CP4666D and FcRed1 were identical to CpMH206 and Fc18, respectively.

### Plant Colonization

Tomato, dunegrass and panic grass seeds were surface-sterilized in 0.5-1.0% (v/v) sodium hypochlorite for 15-20 min with moderate agitation and rinsed with 10-20 volumes of sterile distilled water. Rice seeds were surface sterilized in 70% ethanol for 30 min then transferred to 5% (v/v) sodium hypochlorite for 30 min with moderate agitation and rinsed with 10-20 volumes of sterile distilled water. Plant seeds were germinated on either sterile vermiculite or on 1% agar media supplemented with 1x Hoagland's solution maintained at 25°C and exposed to a 12 hr fluorescent light-regime. The efficiency of seed surface sterilization was assessed by placing 30-50 seeds on 1/10X PDA medium and monitoring the outgrowth of fungi as previously described (Redman *et al.,* 2001, *New Phytol.,* supra). Plants were considered endophyte free only if 100% of those tested had no fungi emerge from tissues.

Endophyte-free plants (up to 5 plants/magenta box) were planted into modified sterile magenta boxes (Redman et al., 2001, Science*,* supra; Marquez *et al.,* 2007, *Science*, supra) containing equivalent amounts (380 grams +/-5 grams) of sterile-sand. The lower chamber was filled with 200 ml of sterile water or 1x Hoagland's solution supplemented with 5 mM CaCl2. After 1-4 weeks, plants were either mock-inoculated (non-symbiotic) or inoculated with fungal endophytes by pipetting 100-1000 ul of spores (10⁴-10⁵/ml) at the base of the crowns or stems (Redman et al., 2001, Science*,* supra). Plants were grown under a 12 hr light regime at 25°C for 1-4 weeks prior to imposing stress.

At the beginning of each stress experiment the efficiency of endophyte colonization in inoculated plants and the absence of endophytes in mock inoculated controls was assessed as follows. A subset of plants representing 20-30% of each treatment were surface sterilized, cut into sections (roots, stem or crown, and leaf ) and placed on 0.1X PDA medium to assess fungal colonization (Redman et al., 2001, Science*,* supra; Redman et al., 2001, New Phytol.*,* supra). After 5-14 days of growth at 22°C with a 12 hr lignt regime, fungi growing out of plant tissues were identified using standard taxonomic and microscopic techniques (above) (Redman et al., 2001, New Phytol.*,* supra). Fungal colonization was assessed using the same procedure at the end of each experiment. In all cases, no fungi emerged from mock-inoculated plants (0% colonization) and all inoculated plants had the fungus they were inoculated with emerge from their tissues (100% colonization).

### Abiotic Stresses

Experiments were performed with plants grown in magenta boxes in a temperature controlled room and a 12 hr fluorescent light regime. Magenta boxes were randomly placed in different locations on shelves in the room for salt and drought stress experiments. Plants used in heat stress experiments were randomly placed in geothermal soil simulators (Redman et al., 2001, Science*,* supra). Each experiment was repeated a minimum of three times and the images in Figure 1 are representative of all replications of each treatment. Magenta boxes contained 1-5 plants and the total number of plants/replication is indicated as (N=XX) in the figure legends. The health of plants was assessed on a scale of 1-5 (1=dead, 2=severely wilted, 3=wilted, 4=slightly wilted, 5=healthy w/o lesions or wilting), and is listed in the figure legends.

To simulate heat stress, tomato plants [seedlings (Fig. 2) or 3-4 week old plants (Tables 2-4)] were placed in geothermal soil simulators and root zones heat stressed by ramping up temperatures from ambient to 50°C in 5°C increments every 48 hr. The first symptoms of heat stress were observed after 5 days in seedlings and 12 days in larger plants. Plants were photographed after 72 hours of heat stress (Fig. 2) and experiments continued for an additional 48 hours.

To simulate salt stress, plants were exposed to 300-500 mM NaCl for 10 -14 days by filling the lower magenta boxes in the double decker systems with salt solutions.

To simulate drought stress, watering was terminated for 7-14 days, depending on the plant host. A hydrometer (Stevens-Vitel Inc.) was used to ensure that soil moisture levels were equivalent between treatments when watering was terminated. After all plants had wilted they were re-hydrated in sterile water for 24-48 hours and photographed.

### Plant Water Usage

Water consumption was measured on plants in double decker magenta boxes (Redman et al., 2001, Science*,* supra; Marquez et al., 2007, Science, supra). Initially 200 ml of water were placed in the lower chamber. Water remaining in the lower chamber after 5 days of plant growth was measured and water usage calculated as ml consumed/5 days.

### Field Study

Commercially available *L. mollis* seeds were used to generate symbiotic (with FcRed1) and non-symbiotic plants as described above. Plants were grown in sterile potting soil for three months in a cold frame greenhouse exposed to ambient temperature and light. A replicate set of plants (30/treatment) was used to ensure that non-symbiotic plants were free of fungi and that symbiotic plants contained FcRed1 as described above. Three months after transplanting, plants were removed with root systems intact and transported back to the laboratory where biomass was assessed followed by analysis of fungal colonization (above).

### DEPOSIT INFORMATION

Applicant has made a deposit on July 21, 2008, of a sample of *Fusarium culmorum* isolate FcRed1 (as described herein) under the Budapest Treaty with the Agricultural Research Service Culture Collection (NRRL) 1815 North University Street, Peoria, IL 61604 USA, NRRL Deposit No. 50152. The present application and deposit are timely filed in that the date for filing this application so as to claim priority to U.S. Provisional Application No. 60/950,755 is July 19, 2008, which is a Saturday. Monday, July 21, 2008, is the first business day following July 19, 2008, and the instant PCT application is being filed on July 21, 2008.

The fungal sample deposited with NRRL were taken from the deposit maintained by co-inventor Russell J. Rodriguez, U.S. Department of Interior, United States Geological Survey, since prior to the filing date of this application. This deposit of the fungal sample will be maintained in the NRRL depository, which is a public depository, for a period of 30 years, or 5 years after the most recent request, or for the enforceable life of the patent, whichever is longer, and will be replaced if it becomes non-viable during that period. Additionally, Applicant has satisfied all of the requirements of 37 C.F.R. §§1.801-1.809, including providing an indication of the viability of the sample, or will do so prior to the issuance of a patent based on this application. Applicant imposes no restriction on the availability of the deposited material from NRRL; however, Applicant has no authority to waive any restrictions imposed by law on the transfer of biological material or its transportation in commerce. Applicant does not waive any infringement of rights granted under this patent.

## Claims

1. A method of treating a target plant to confer salinity tolerance comprising inoculating said plant or a part of said plant with a culture of *Fusarium spp.*

2. The method of treating a target plant according to claim 1, wherein said plant is a monocot or said plant part is from a monocot.

3. The method of treating a target plant according to claim 2, wherein said monocot is selected from the group consisting of a grass, wheat and rice.

4. The method of treating a target plant according to claim 1, wherein said plant is a dicot or said plant part is from a dicot.

5. The method of treating a target plant according to claim 4, wherein said dicot is a eudicot.

6. The method of treating a target plant according to claim 5, wherein said eudicot is selected from the group consisting of a tomato, watermelon, squash, cucumber, strawberry, pepper, soybean, alfalfa and Arabidopsis.

7. The method of treating a target plant according to claim 1, wherein said plant part is a seed.

8. The method of treating a target plant according to claim 1, wherein said plant part is a seedling.

9. The method of treating a target plant according to claim 1, wherein said *Fusarium spp.* is *Fusarium culmorum.*

10. The method of treating a target plant according to claim 9, wherein said *Fusarium culmorum* is *Fusarium culmorum* isolate FcRed1 having NRRL Deposit No. 50152.

11. The method of treating a target plant according to claim 1 or 10, further comprising inoculating said plant or part of said plant with at least one additional class 2 endophytic fungal endophyte.

12. The method of treating a target plant according to any claim 1 to claim 11, wherein the method also confers drought tolerance to the target plant.

13. A method of treating a target plant to confer drought tolerance comprising inoculating said plant or a part of said plant with a culture of *Fusarium culmorum* isolate FcRed1 having NRRL Deposit No. 50152.

14. A method of removing salt from a growth media comprising inoculating a plant or a part of said plant with a culture of *Fusarium culmorum* isolate FcRed1 having NRRL Deposit No. 50152 and permitting the inoculated plant to grow in the growth media.

15. The method of claim 14, wherein the growth media is soil.

16. A composition comprising a pure culture of *Fusarium culmorum* isolate FcRed1 having NRRL Deposit No. 50152.

17. An inoculum comprising the mycelia and/or spores of *Fusarium culmorum* isolate FcRed1 having NRRL Deposit No. 50152.

18. The inoculum of claim 17, wherein the inoculum is a seed inoculum.

19. The inoculum of claim 17 or 18, wherein the inoculum further comprises the mycelia, hyphae and/or spores of a fungus other than those of *Fusarium culmorum* isolate FcRed1 having NRRL Deposit No. 50152.

## Patentansprüche

1. Verfahren zur Behandlung einer Zielpflanze, um ihr Salinitätstoleranz zu verleihen, das das Inokulieren der Pflanze oder eines Teils der Pflanze mit einer Kultur von *Fusarium spp.* umfasst.

2. Verfahren zur Behandlung einer Zielpflanze nach Anspruch 1, worin die Pflanze eine Monokotyle ist oder der Pflanzenteil von einer Monokotyle stammt.

3. Verfahren zur Behandlung eine Zielpflanze nach Anspruch 2, worin die Monokotyle aus der aus Gras, Weizen und Reis bestehenden Gruppe ausgewählt ist.

4. Verfahren zur Behandlung eine Zielpflanze nach Anspruch 1, worin die Pflanze eine Dikotyle ist oder der Pflanzenteil von einer Dikotyle stammt.

5. Verfahren zur Behandlung eine Zielpflanze nach 4, worin die Dikotyle eine Eudikotyle ist.

6. Verfahren zur Behandlung eine Zielpflanze nach Anspruch 5, worin die Eudikotyle aus der aus Tomate, Wassermelone, Kürbis, Gurke, Erdbeere, Pfeffer, Sojabohne, Luzerne und Arabidopsis bestehenden Gruppe ausgewählt ist.

7. Verfahren zur Behandlung eine Zielpflanze nach Anspruch 1, worin der Pflanzenteil ein Samen ist.

8. Verfahren zur Behandlung eine Zielpflanze nach Anspruch 1, worin der Pflanzenteil ein Keimling ist.

9. Verfahren zur Behandlung eine Zielpflanze nach Anspruch 1, worin die *Fusarium spp. Fusarium culmorum* ist.

10. Verfahren zur Behandlung eine Zielpflanze nach Anspruch 9, worin das *Fusarium culmorum* das *Fusarium-culmorum-Isolat* FcRed1 mit der NRRL-Hinterlegungsnr. 50152 ist.

11. Verfahren zur Behandlung eine Zielpflanze nach Anspruch 1 oder 10, das weiters das Inokulieren der Pflanze oder des Pflanzenteils mit zumindest einer zusätzlichen endophytischen Pilz-Endophyte der Klasse 2 umfasst.

12. Verfahren zur Behandlung eine Zielpflanze nach einem der Ansprüche 1 bis 11, worin das Verfahren der Zielpflanze auch Trockenheitstoleranz verleiht.

13. Verfahren zur Behandlung eine Zielpflanze zur Verleihung von Trockenheitstoleranz, umfassend das Inokulieren der Pflanze oder des Pflanzenteils mit einer Kultur des *Fusarium-culmorum-Isolats* FcRed1 mit der NRRL-Hinterlegungsnr. 50152.

14. Verfahren zur Entfernung von Salz aus einem Wachstumsmedium, umfassend das Inokulieren einer Pflanze oder eines Pflanzenteils mit einer Kultur des *Fusarium-culmorum*-Isolats FcRed1 mit der NRRL-Hinterlegungsnr. 50152 und das Heranwachsenlassen der inokulierten Pflanze in dem Wachstumsmedium.

15. Verfahren nach Anspruch 14, worin das Wachstumsmedium Erdreich ist.

16. Zusammensetzung, die eine reine Kultur des *Fusarium-culmorum*-Isolats FcRed1 mit der NRRL-Hinterlegungsnr. 50152 umfasst.

17. Inokulum, das die Myzelien und/oder Sporen des *Fusarium-culmorum*-Isolats FcRed1 mit der NRRL-Hinterlegungsnr. 50152 umfasst.

18. Inokulum nach Anspruch 17, worin das Inokulum ein Sameninokulum ist.

19. Inokulum nach Anspruch 17 oder 18, worin das Inokulum weiters die Myzelien, Hyphen und/oder Sporen eines anderen Pilzes als jene des *Fusarium-culmorum-*Isolats FcRed1 mit der NRRL-Hinterlegungsnr. 50152 umfasst.

## Revendications

1. Méthode de traitement d'une plante cible pour conférer une tolérance à la salinité comprenant l'inoculation dans ladite plante ou une partie de ladite plante d'une culture de *Fusarium spp.*

2. Méthode de traitement d'une plante cible selon la revendication 1, où ladite plante est une monocotylédonée ou ladite partie de plante provient d'une monocotylédonée.

3. Méthode de traitement d'une plante cible selon la revendication 2, où ladite monocotylédonée est sélectionnée dans le groupe consistant en herbe, blé et riz.

4. Méthode de traitement d'une plante cible selon la revendication 1, où ladite plante est une dicotylédone ou ladite partie de plante provient d'une dicotylédone.

5. Méthode de traitement d'une plante cible selon la revendication 4, où ladite dicotylédone est une eudicotylédone.

6. Méthode de traitement d'une plante cible selon la revendication 5, où ladite eudicotylédone est sélectionnée dans le groupe consistant en tomate, melon d'eau, courge, concombre, fraise, piment, soja, luzerne et Arabidopsis.

7. Méthode de traitement d'une plante cible selon la revendication 1, où ladite partie de plante est une graine.

8. Méthode de traitement d'une plante cible selon la revendication 1, où ladite partie de plante est un semis.

9. Méthode de traitement d'une plante cible selon la revendication 1, où ledit *Fusarium spp* est *Fusarium culmorum.*

10. Méthode de traitement d'une plante cible selon la revendication 9, où ledit *Fusarium culmorium* est l'isolat FcRed 1 de *Fusarium culmorum* ayant le No de Dépôt NRRL 50152.

11. Méthode de traitement d'une plante cible selon la revendication 1 ou 10, comprenant en outre l'inoculation dans ladite plante ou une partie de ladite plante d'au moins un endophyte fongique endophyque additionnel de classe 2.

12. Méthode de traitement d'une plante cible selon l'une quelconque des revendications 1 à 11, où la méthode confère également une tolérance à la sécheresse à la plante cible.

13. Méthode de traitement d'une plante cible pour conférer une tolérance à la sécheresse comprenant l'inoculation dans ladite plante ou dans une partie de ladite plante d'une culture d'isolat FcRed1 de *Fusarium culmorum* ayant le No de dépôt NRRL 50152.

14. Méthode de retrait de sel d'un milieu de culture comprenant l'inoculation dans une plante ou dans une partie de ladite plante d'une culture d'isolat FcRed1 de *Fusarium culmorum* ayant le No de dépôt NRRL 50152 et de permettre à la plante inoculée de pousser dans le milieu de croissance.

15. Méthode selon la revendication 14, où le milieu de croissance est le terroir.

16. Composition comprenant une culture pure d'isolat FcRed1 de *Fusarium culmorum* ayant le No de dépôt NRRL 50152.

17. Inoculum comprenant l'éventail mycélial et/ou les spores de l'isolat FcRed1 de *Fusarium culmorum* ayant le No de dépôt NRRL 50152.

18. Inoculum selon la revendication 17, où l'inoculum est un inoculum de graine.

19. Inoculum selon la revendication 17 ou 18, où l'inoculum comprend en outre l'éventail mycélial, l'hyphéma et/ou les spores d'un champignon autre que ceux de l'isolat FcRed1 de *Fusarium culmorium* ayant le No. de dépôt NRRL 50152.
